# EUROPEAN PATENT SPECIFICATION

(11) **EP 0 673 710 B1**
(45) Date of publication and mention of the grant of the patent: **06.10.1999**
(21) Application number: 95850035.7
(22) Date of filing: 15.02.1995
(51) Int. Cl.: B23Q 11/00

(54) **Balanced boring head**
Balancierter Bohrkopf
Tête d'alésage équilibrée

(30) Priority: 28.02.1994 SE 9400666
(43) Date of publication of application: 27.09.1995
(73) Proprietor: SANDVIK AKTIEBOLAG, 811 81 Sandviken (SE)
(72) Inventor: Frank, Peter, D-98593 Struth-Helmershof (DE)

(56) References cited:
- DE-A- 2 728 975
- GB-A- 2 164 278

## Description

The invention is in the field of cutting tools for machine tools and relates to a mechanism on a boring tool with interchangeable tool bit holders.

For the precision finishing and microfinishing of bores with rotary tools, fine boring heads are known, which can be universally set for machining different bore diameters. The mass is necessarily eccentrically displaced. This leads to an unbalance in the fine boring head which causes vibrations preventing precise bores with high surface quality from being obtained. Modern cutting materials permit a high cutting speed, for instance around 20 000 rpm, so that rotary boring tools with correspondingly high speeds can be used. The higher the speeds, the more negative the influence of the unbalance and consequently the effect of vibrations on the bore quality.

Different fine boring heads are already known which comprise an arrangement for compensating unbalance. Thus in US-A-4 626 144 a boring head in accordance with the preamble of claim 1 is disclosed comprising weight balancing members in the form of circular segments. They are pivoted from their given position about a common fulcrum by means of pull cords fixed thereto. However, this construction is complicated and comprises many different parts. Moreover, the use of cords or strings is apt to failure and problems of maintenance. Further, the construction requires a weakening narrowing of its basic body.

DE-A-2 034 601 discloses a drill head which is operable by a hydraulic pressure medium and which comprises means for compensating the unbalance in the form of diametrically facing, special balance weights ensuring that the centre of gravity of the arrangement is in the shaft axis or rotation axis of the drill head in at least one position of the hydraulic pressure medium feed mechanism. The cylindrical sleeve surrounding the two flange-like connecting parts is used for protecting the inner parts against contamination. However, besides necessitating a hydraulic pressure medium, it has proved desirable to further simplify the construction of the unbalance compensation arrangement.

Thus, a main object of the present invention is to further simplify the construction of known boring heads comprising unbalance compensating means, making it possible to cut down on manufacturing costs and also the weight, whilst further increasing the operating reliability due to a simpler construction.

Another object of the present invention is to construct a fine boring head equipped with a reliable unbalance compensating means in order to achieve superior machining qualities at high rotation speeds.

A further object of the present invention is to construct a fine boring head that does not comprise a weakening narrowing of the diameter of its basic body.

These objects have been achieved by constructing a boring head which comprises the features as defined in claim 1.

Further features and advantages of the invention can be gathered from the following description of a preferred embodiment relative to the attached drawings, wherein:

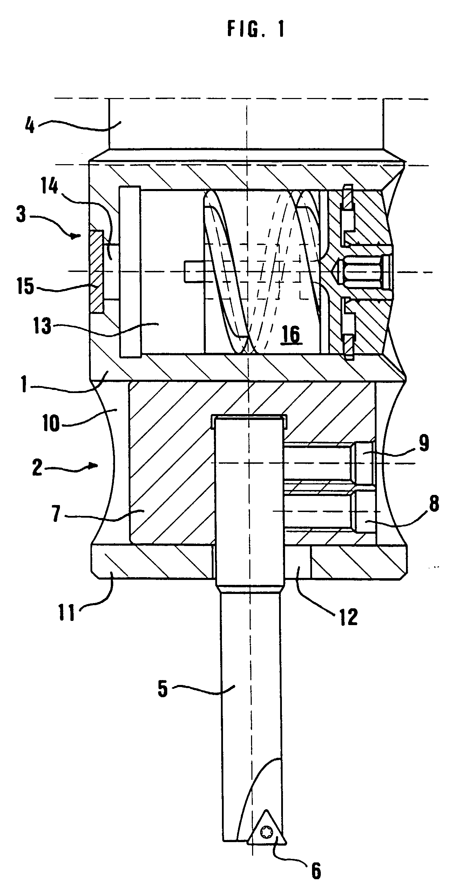

Figure 1 is an embodiment of a drill head according to the invention in axial section;
Figure 2 is an exploded axial view of the unbalance compensating section of the drill head of Figure 1, in axial section;
Figure 3 is a side view of the drill head; and
Figure 4 is partially a side view and partially an axial section of the drill head.

The fine drill or boring head according to the invention comprises a basic body 1 which is divided into a boring tool holder section 2 and an unbalance compensating section 3. Adjacent to section 3 is provided a not further specified journal or tapered shank part 4 of known configuration. The journal or shank part 4 is used for receiving the tool in a machine spindle or in an adaptor. On the other end of the drill head, a replaceable cutting bit holder 5 comprising an indexable cutting bit or insert 6 is placed in the bore of an adjusting member 7 and is secured by one or two screws 8 and 9. Two standard diameters of bit holder 5 are 10 and 16 mm, respectively. Adjusting member 7 is positioned in a sliding manner in a cross bore 10 which is substantially radial and perpendicular to the axial extension of the drill head. The bottom wall 11 of basic body 1 is provided with an elongated hole 12 (e.g., between 10 and 17 mm wide and between 13,5 and 21 mm long) which is eccentrically positioned in relation to the central axis of the drill head in order to make possible an eccentrical positioning of the cutting bit holder 5.

The adjusting member 7 can be slid in both directions by means known in the art which are not further illustrated in the drawings. Thus, for example a scale screw with a threaded shaft can be fitted into an internal thread in the end of adjusting member 7 being opposite screws 8 and 9. This makes it possible to set the desired bore diameter by properly setting the radial displacement of bit holder 5, the center of mass consequently also being moved away from or towards the rotation axis. Hence, in the case of an "adjusted" bit holder, the rotary movement of the holder 5 no longer takes place about the center of gravity of the mass system, so that vibrations can occur. When the desired position of adjusting member 7 has been attained, it is suitably secured by a not-illustrated locking or fixating screw fitted in a threaded throughhole in the basic body and facing the adjusting member 7.

Above tool holder section 2 is unbalance compensating section 3 which constitutes the essential feature of the present invention. The unbalance compensating arrangement is housed in a bore 13. Bore 13 is substantially parallel to bore 10. Of safety reasons and of load balancing reasons, this is not a through-bore. Because of production convenience reasons, it ends with a concentric hole 14 which has been plugged with a sealing plug 15. An unbalance compensating member 16 of basic cylindrical form fits snugly in the bore 13. A helical slot or flute 17 is formed on the cylindrical surface of member 16. A means 18 is fixed in the cylindrical wall of bore 13 and protrudes radially into the bore 13, into the slot 17. Means 18 has suitably the form of a cylindrical pin but it could also have another shape, e.g. a square cross-section or an elongated shape corresponding to the helical groove 17. In combination, the helical groove 17 and the pin 18 constitute a gear which transforms a radial movement into an axial movement. Further, two concentrical bores 19 and 20 are provided around the centre axis of member 16. These two bores are interconnected via a slot-like through-passage 21. A spindle 22 comprises a flattened sword-like blade 23 that fits into the slot-like through-passage 21. Rotation torque is transferred from spindle 22 to member 16 by said blade 23 in cooperation with said connection 21. Further, spindle 22 comprises a circular collar 24 with abutment faces 25 and 26. Face 25 can be brought into abutment with member 16 and face 26 is in permanent contact with the ring 27 which is of known construction, in the form of an interrupted, annular ring with a grip at each of its two ends. Often, it is provided with a low-friction polymer layer on its surface. It is fixedly, i.e. non-rotatably, fitted into the annular recess 28 and locks spindle 22 and member 16 within bore 13. Head 34 of spindle 22 comprises a suitable hole 29 for turning the spindle around, for instance with a hexagonal key. Head 34 protrudes through the opening of retaining ring 27, on whose other side it is comprised by a scale dial 30. The through-hole 31 of scale-screw 30 is fixedly connected with head 34, e.g. via a shrinkage joint, a thread joint, a retaining ring, by an adhesive, etc. The through-hole 31 can be provided with annular grooves 32 for applying an adhesive. In the same way as spindle 22, scale dial 30 is in permanent, sliding abutment with retaining ring 27.

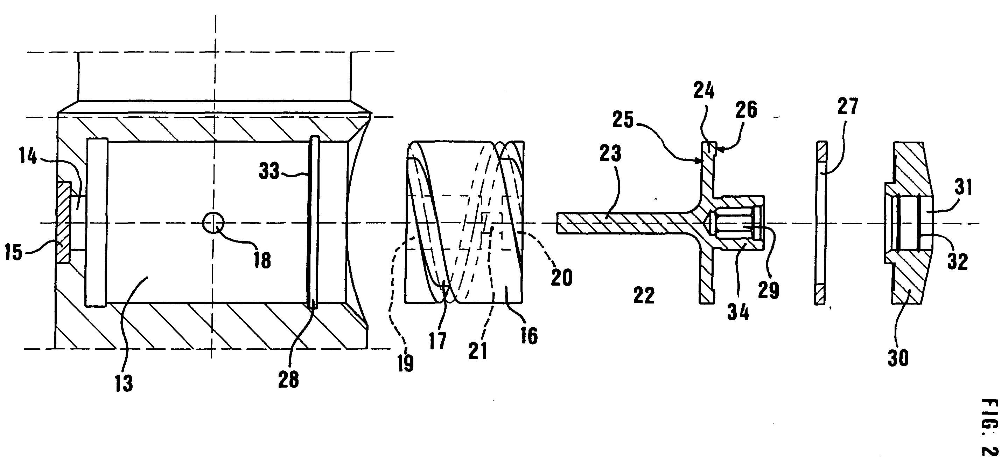

As can be distinguished in Fig. 2, the annular recess 28 has one sloping wall 33. In this way, the locking ring 27 will always expand to a position where it fits firmly without any axial play.

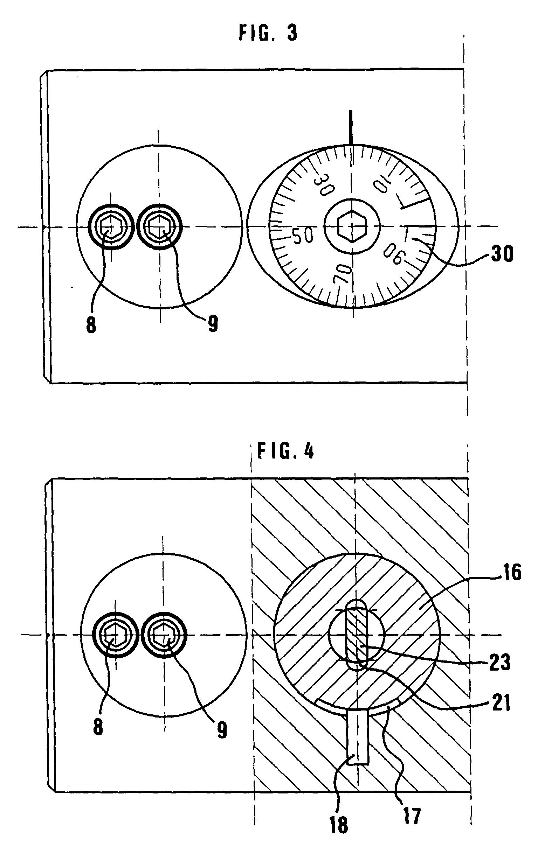

In operation, in order to compensate for unbalance caused by the eccentric position of tool holder 5, the spindle 22 is turned by a suitable key inserted into hole 29. Suitably, hole 29 has a hexagonal cross-section. The turning movement is transferred to unbalance compensating member 16 by sword 23 and slot-like through-passage 21. When member 16 is forced to rotate, it is simultaneously forced to move axially and substantially parallel to bore 10 (substantially perpendicularly to the axis of the drill head) due to the encroachment of pin 18 in groove 17. The exact positioning of member 16 is realized with the help of a scale on scale dial 30, see Fig. 3. In the illustrated embodiment, the scale goes from 0 to 100, whereby the two end-values do not fully correspond to a complete revolution. Thus, there is a gap on the scale dial in order to avoid an overlap and an interference between the end ranges. The values 0 and 100 correspond to the end positions of the axial movement of member 16.

Obviously, groove or flute 17 will cause a certain degree of unbalance in a radial direction perpendicular to the axial direction of unbalance compensating member 16. In a preferred embodiment of the present invention, this unbalance can be compensated for by providing a second helical flute on the cylindrical surface of member 16. This second flute will have the same direction and substantially the same pitch and cross-sectional area as flute 17. In order to optimize the unbalance compensation, it is suitably displaced by substantially 180° in relation with flute 17.

The correct adjustment of the set point is established with the help of a calculator, tables and/or diagrams. The decisive parameters are the mass of the replaceable tool holder and the boring diameter. The empirical procedure has proved best, in that with the tool holder 5 fixed for different boring diameters, the optimum position of member 16 is established. The corresponding value on scale dial 30 is read and marked. Thus, each successive boring diameter is dealt with for each tool holder, so as to finally obtain a complete table or diagram. The scale marks can be looked upon as fixed setting values and if they are not too far apart, it is optionally possible to interpolate a boring diameter between two graduation marks.

Preferrably, once the set point of member 16 has been adjusted, its position can be safely maintained by securing it with a fixing screw. This screw can be placed in a threaded through-bore in basic body 1 facing the cylindrical surface of member 16 and have a protruding end that presses against member 16. Preferrably, this fixing screw presses into the above mentioned, second flute.

If desired, the drill head according to the invention can also be designed for coolant through the center of the boring bars.

Thanks to the simple and compact unbalance compensating construction of the present invention, machining qualities never previously achieved have been obtained. Thus, extremely smooth surfaces practically equal to ground surfaces have been achieved. Moreover, the life of the cutting inserts has been considerably extended. Speeds around 20 000 rpm have successfully been used.

## Claims

1. A balanced boring head including a boring tool holder section (2) and an unbalance compensating section (3), whereby the boring tool holder section (2) comprises an adjusting member (7) for positioning a boring tool holder (5) eccentrically in relation with the central axis of the boring head,
***characterized*** in that the unbalance compensating section (3) comprises a bore (13) which is substantially perpendicular to the central axis of the boring head, in that an unbalance compensating member (16) of basic cylindrical shape is placed in said bore (13), whereby a helical flute or groove (17) is formed on the cylindrical surface of said member (16), in that a fix pin or similar fix means (18) protrudes into said helical flute (17) so that the compensating member (16) is forced to move axially in the bore (13) and substantially perpendicularly to the central axis of the drill head, when the compensating member is forced to rotate, thus compensating for the unbalance caused by the eccentric position of the tool holder (5), and further that the unbalance compensating member (16) has two axial, concentrical holes (19, 20) which are inter-connected via a slot-like through-passage (21), that the unbalance compensating section comprises a spindle (22) with a sword-like flattened blade (23) placed in said axial holes through said through-passage (21), whereby rotational movement of the spindle (22) is transferred to said member (16) by cooperation between said sword-like blade (23) and said through-passage (21).

2. Boring head according to claim 1,
***characterized*** in that the spindle (22) comprises a substantially circular collar (24) and a head (34), the compensating member (16) and the spindle being secured in said bore (13) by a locking or retaining ring (27) which is in sliding abutment with said circular collar, whereby the head (34) of the spindle protrudes through the locking ring (27).

3. Boring head according to claim 2,
***characterized*** in that a scale dial (30) is positioned in sliding abutment on the other, outer side of the locking ring (27), whereby said scale dial is fastened on the protruding head (34) of the spindle (22).

4. Boring head according to claim 2 or 3,
***characterized*** in that the locking ring (27) is fixed in an annular recess (28) in the bore (13).

## Patentansprüche

1. Ausbalancierter bzw. ausgewuchteter Bohrkopf mit einem Halteabschnitt (2) für ein Bohrwerkzeug und einem eine Unwucht kompensierenden Abschnitt (3), wodurch der Halteabschnitt (2) für das Bohrwerkzeug ein Einstellteil (7) aufweist, um einen Bohrwerkzeughalter (5) bezüglich der zentralen Achse des Bohrkopfes exzentrisch anzuordnen,
**dadurch gekennzeichnet**, daß der Abschnitt (3) zur Kompensierung der Unwucht eine Bohrung (13) aufweist, die sich im wesentlichen senkrecht zu der zentralen Achse des Bohrkopfes erstreckt, daß ein Teil (16) von im wesentlichen zylindrischer Form, welches die Unwucht kompensiert, in der Bohrung (13) angeordnet ist, wobei eine schraubenförmige Furche oder Nut (17) auf der zylindrischen Oberfläche des Teiles (16) gebildet wird, daß ein Fixierstift oder eine ähnliche Fixiereinrichtung (18) in die schraubenförmige Nut (17) hinein vorsteht, so daß das ausgleichende Teil (16) zwangsweise axial in der Bohrung (13) und im wesentlichen senkrecht zur zentralen Achse des Bohrkopfes bewegt wird, wenn das kompensierende Teil zwangsweise rotiert, und damit die durch die exzentrische Position des Werkzeughalters (5) hervorgerufene Unwucht ausgleicht, und weiterhin dadurch, daß das die Unwucht ausgleichende Teil (16) zwei axiale, konzentrische Löcher (19, 20) hat, die über einen schlitzartigen Durchgang (21) miteinander verbunden sind, daß der Abschnitt zur Kompensierung der Unwucht eine Spindel (22) mit einer schwertartigen, abgeflachten Klinge (23) aufweist, welche durch den Durchgang (21) in den axialen Löchern bzw. Bohrungen angeordnet ist, wodurch eine Drehbewegung der Spindel (22) durch Zusammenwirken zwischen der schwertartigen Klinge (23) und dem Durchgang (21) auf das Teil (16) übertragen wird.

2. Bohrkopf nach Anspruch 1, **dadurch gekennzeichnet**, daß die Spindel (22) einen im wesentlichen kreisförmigen Kragen (24) und einen Kopf (34) aufweist, wobei das Ausgleichsteil (16) und die Spindel in der Bohrung (13) durch einen Sicherungs- oder Haltering (27) gesichert ist, welcher gleitend an dem kreisförmigen Kragen anliegt, wodurch der Kopf (34) der Spindel durch den Sicherungsring bzw. Sperring (27) vorsteht.

3. Bohrkopf nach Anspruch 2, **dadurch gekennzeichnet**, daß eine Wählscheibe (30) in Gleitanlage an der anderen, äußeren Seite des Sperringes (27) positioniert ist, wobei die Wählscheibe an dem vorstehenden Kopf (34) der Spindel (22) befestigt ist.

4. Bohrkopf nach Anspruch 2 oder 3, **dadurch gekennzeichnet**, daß der Sicherungsring (27) in einer ringförmigen Aussparung (28) in der Bohrung (13) fixiert ist.

## Revendications

1. Tête d'alésage équilibrée comprenant une section de support d'outil d'alésage (2) et une section de compensation de déséquilibre (3), dans laquelle la section de support d'outil d'alésage (2) comprend un élément d'ajustement (7) destiné au positionnement d'un support d'outil d'alésage (5) de façon excentrique par rapport à l'axe central de la tête d'alésage,
caractérisée en ce que la section de compensation de déséquilibre (3) comprend un alésage (13) qui est pratiquement perpendiculaire à l'axe central de la tête d'alésage, en ce qu'un élément de compensation de déséquilibre (16) de forme fondamentale cylindrique est placé dans ledit alésage (13), grâce à quoi une goujure ou gorge hélicoïdale (17) est formée sur la surface cylindrique dudit élément (16), en ce qu'une broche fixe ou moyen similaire fixe (18) fait saillie jusque dans ladite goujure hélicoïdale (17) de sorte que l'élément de compensation (16) est forcé à se déplacer axialement dans l'alésage (13) et de façon pratiquement perpendiculaire à l'axe central de la tête de forage, lorsque l'élément de compensation est forcé à tourner, en compensant ainsi le déséquilibre provoqué par la position excentrique du support d'outil (5), et en outre en ce que l'élément de compensation de déséquilibre (16) comporte deux trous concentriques axiaux (19, 20) qui sont reliés l'un à l'autre par l'intermédiaire d'un passage de traversée en forme de fente (21), en ce que la section de compensation de déséquilibre comprend une broche (22) comportant une lame aplatie en forme d'épée (23) placée dans lesdits trous axiaux au travers dudit passage de traversée (21), grâce à quoi un mouvement de rotation de la broche (22) est transféré vers ledit élément (16) par une coopération entre ladite lame en forme d'épée (23) et ledit passage de traversée (21).

2. Tête d'alésage selon la revendication 1,
caractérisée en ce que la broche (22) comprend un collet pratiquement circulaire (24) et une tête (34), l'élément de compensation (16) et la broche étant fixés dans ledit alésage (13) par une bague de blocage ou de retenue (27) qui est en butée coulissante avec ledit collet circulaire, grâce à quoi la tête (34) de la broche fait saillie à travers la bague de blocage (27).

3. Tête d'alésage selon la revendication 2,
caractérisée en ce qu'un cadran gradué (30) est positionné en butée coulissante sur l'autre face externe de la bague de blocage (27), grâce à quoi ledit cadran gradué est fixé sur la tête saillante (34) de la broche (22).

4. Tête d'alésage selon la revendication 2 ou 3,
caractérisée en ce que la bague de blocage (27) est fixée dans un évidement annulaire (28) dans l'alésage (13).
